# EUROPEAN PATENT APPLICATION

(11) **EP 4 786 036 A1**
(43) Date of publication of application: **05.08.2026**
(21) Application number: 25154813.7
(22) Date of filing: 29.01.2025
(51) Int. Cl.: B01D 63/08, B01D 65/10

(54) **FILTRATION DEVICE**

(71) Applicant: Sartorius Stedim Biotech GmbH, 37079 Göttingen (DE)
(72) Inventor: LOEWE, Thomas, 37079 Goettingen (DE); JAKOB, Fabian, 37079 Goettingen (DE); FRIESE, Thomas, 37079 Goettingen (DE)
(74) Representative: Prinz & Partner mbB

(57) **Abstract**

A filtration device (10), in particular a small-scale filtration device for production of biopharmaceuticals, is shown. The filtration device (10) comprises a housing including a top cover (12) having an unfiltrate inlet (18) and a bottom cover (14) having a filtrate outlet (22), and at least one filter support (32) positioned between the top cover (12) and the bottom cover (16) along a vertical direction (A). Each filter support (32) is equipped with at least one filter (46, 48) having a first membrane (50) and a second membrane (52), wherein each membrane (50, 52) has a filtrate side and an opposite unfiltrate side. Additionally, the first membrane (50) comprises at least one vent opening (54) for releasing gas trapped between the first membrane (50) and the second membrane (52).

## Description

The invention relates to a filtration device, in particular a small-scale filtration device for production of biopharmaceuticals.

In the context of the present invention, a small-scale filtration device is to be understood as a device that is used for relatively small batches, ranging from some milliliters to a few liters, with an effective filter area of about 5 to 100 cm². For example, an intravenous medication of such small volume, particularly a medication of advanced therapies like gene therapy medicine customized sometimes for only a single patient, may be filtered by a small-scale filtration device just before is given to a patient. However, the concept of the invention may also be applied to larger filtration devices with an effective filter area of up to 300 cm² or even more.

From EP 2 363 197 A2 filtration cartridges having a fluid inlet and a fluid outlet are known, which comprise a top end cap, a bottom end cap and a vent on at least one of the end caps. One or more filtration units are provided, each comprising two filtration plates. Each filtration plate has a membrane support plate having at least one filtration membrane respectively bonded to a bottom surface of the membrane support plate and to a top surface of the membrane support plate. The membrane support plates of the filtration plates are bonded to each other at an outer peripheral surface to form seals to prevent fluid feed from entering the fluid outlet except by having passed through at least one of the membranes. Fluid flow paths are provided from the fluid inlet, through the membranes and through the fluid outlet that prevent fluid feed from the inlet from bypassing the membranes and which provide a single permeate pathway including a row of holes for permeate to flow to the fluid outlet.

Another type of filtration cartridges is described in EP 1 987 869 A1. This filtration cartridge is formed from one or a plurality of filtration units which are stacked and bonded to each other to assure fluid flow from an inlet to the filtration cartridge, through at least one membrane and through an outlet from the filtration cartridge. Each filtration unit comprises one membrane support plate or two membrane support plates sealed together at their inner and outer peripheries. Each membrane support plate has a first surface and a second surface. A filtration membrane is bonded to each of the first and second surfaces of each membrane support plate. The filtration cartridge is provided with end caps, one having an inlet and one having an outlet. Each end cap is sealed to an isolation plate preventing fluid from entering the interior of the end cap, and a fluid deflection plate is sealed to the top isolation plate and functions to direct incoming fluid to the outer radial portion of the filtration units.

For both types of above filtration cartridges the filtration membranes bonded to the bottom and top surfaces of the membrane support plate have different sizes and must not be confused with one another.

In many filtration applications double-layered filter material comprising a first membrane and a second membrane is used. For example, in such a filtration application the first membrane corresponds to a pre-filter while the second membrane corresponds to a main filter. By using a pre-filter, the service life of the filter elements can be improved, i.e. extended.

In the biopharmaceutical industry, a so-called "Pre-Use Post Sterilization Integrity Test" (PUPSIT) is a regulatory requirement of the Good Manufacturing Practice (GMP) for sterile medicinal products to re-verify liquid filter performance after exposure to filter manufacturing, sterilization, transportation, and installation, but before the actual use of the filtration device for drug manufacturing. The goal of PUPSIT is to reduce process risk and potential product sterility concerns.

When porous filter membranes are used, this test is generally carried out with a pressurized test gas, usually air, being applied from the unfiltrate side onto the membrane, which is wetted with a liquid (usually water or a buffer solution). Depending on the structure of the membrane, the pressure causes a certain portion of the gas to penetrate through the wetted membrane. This portion can be measured using suitable measuring equipment, and it is specific to a membrane with a corresponding pore size. A more detailed description of the test procedure can be found in the GMP literature.

In practice, the integrity of a liquid filter can be determined in two different ways: The bubble point test determines the differential pressure required to expel the wetting liquid from the largest pores, whereas the diffusion or forward flow test measures the gas flow rate through the porous structure of a wetted filter at a defined differential pressure. The latter is the preferred test for single-use setups since it requires lower pressure. The measurements differ in the way they are carried out, but have in common that pressurization with a gas takes place on the unfiltrate side of the wetted membrane.

In particular, when a double-layered filter material is used in a filtration device, test gas may be trapped between the two wetted membranes as a result of the PUPSIT, as the pressurized gas penetrated through the first membrane may not be able to penetrate through the second membrane once the PUPSIT is completed.

In particular, during the PUPSIT the pressure is increased on the unfiltrate side of the filter element such that the pressure builds up between the main filter and the pre-filter as the main filter usually has smaller pore sizes and accordingly a resistance towards higher pressures. After the test, when the external pressure is not applied anymore and returns atmospheric pressure, the pressurized gas between the membranes may expand when the diffusion velocity of the gas is not sufficient to allow the gas to escape from the space between the membranes, in particular since the membranes are still wetted such that the gas is trapped in between the membranes. This might result in defects in one or both of the membranes or the joining of the membranes to the housing, the filter support plates, the top cover or the bottom cover. Moreover, when gas is trapped between the membranes, the filter surface area is not fully exposed and therefore cannot provide the full filter performance during subsequent use of the filtration device.

Therefore, there is a certain risk that an upstream (pre-use) integrity test showed intact filters and damage occurs only as a result of the pressure drop. The user then wrongly assumes that the filter is flawless and carries out the actual filtration with a defective filter. In practice, PUPSIT is therefore often not used for double-layered filter material.

Accordingly, it is an object of the invention to provide a filtration device, in particular a small-scale filtration device, for the production of biopharmaceuticals, with a double-layered filter material, which prevents gas from being trapped between the two membranes of the filter material as a result of PUPSIT and also provides a sufficiently large effective filter area per membrane in a subsequent filtration process.

The above problem is solved by a filtration device according to claim 1. Advantages and expedient embodiments of the invention are apparent from the dependent claims.

The invention provides a filtration device, in particular a small-scale filtration device for production of biopharmaceuticals, comprising a housing including a top cover having an unfiltrate inlet and a bottom cover having a filtrate outlet, and at least one filter support positioned between the top cover and the bottom cover along a vertical direction. Each filter support is equipped with at least one filter having a first membrane and a second membrane, wherein each membrane has a filtrate side and an opposite unfiltrate side. Additionally, the first membrane comprises at least one vent opening for releasing gas trapped between the first membrane and the second membrane.

By providing vent openings in the first membrane, i.e. the pre-filter, it can be ensured that after an integrity test any gas that might otherwise be trapped in between the two membranes can exit the filtration device even after a pressure drop and when both membranes are wetted. Accordingly, almost the entire filtration surface or at least a large part of the filtration surface can be used after the integrity test, i.e. during normal operation such that effective filtration is guaranteed from the start.

In the context of the present invention, a vent opening of the first membrane is to be distinguished from the pores of the first membrane. In particular, a vent opening provides a defined passage through the first membrane consisting of at least one channel from one surface of the membrane to the opposite surface of the membrane and is intended to give a gas stream a passage even when the remainder of the membrane pore structure is still filled with liquid. In a filtration device without such vent openings, gas may get trapped between the membranes since the gas pressure between the membrane layers is below the pressure which typically allows gas to pass the pore structure when exceeded.

The at least one filter support or an additional filter support may be positioned on one or both sides of a filter support plate which is positioned between the top cover and the bottom cover along a vertical direction.

The filter support plate itself may have various designs, depending on the usage of the filtration device. For example, the filter support plate may be a structured disc made from plastic materials, a porous ceramic or a voluminous fleece. In any event, the filter support plate must be able to reliably carry a double-layered filter material, i.e. a first membrane placed on top of a second membrane, at least on one of its sides (upper or lower side).

Generally, the first membrane and the second membrane may have different pore sizes, wherein typically the nominal pore size of the first membrane, which is located upstream of the second membrane, is larger than the nominal pore size of the second membrane, as the first membrane is intended to act as a pre-filter while the second membrane is intended to act as a main filter.

Alternatively, the first membrane and the second membrane can have the same pore sizes, i.e. substantially the same nominal pore size, in order to enable a redundant filtration process. In some cases, the first membrane and the second membrane may even be identical.

With respect to the term "vertical direction", it is to be understood that the filtration device is designed such that gravity at least assists the flow of fluid to be filtered through the device from the unfiltrate inlet to the filtrate outlet. Accordingly, the use position of the filtration device is an upright position with the top cover located above the optional filter support plate(s) and the bottom cover. Of course, it is not necessary that the "vertical direction" is perfectly vertical.

Accordingly, the terms "top", "bottom", "upper", "lower", "upward", "downward", etc. refer to the vertical direction which corresponds to the upright use position. Of course, the filtration device may be used in other orientations as well, and terms such as "upper", "lower" etc. are therefore not limiting the use position of the filtration device or the orientation of the filter support or filter support plate in any way.

The filters used in the filtration device are preferably flat filter membranes. However, depending on the application, other filter types such as non-woven or woven filters or pleated filters could also be employed.

As already mentioned, the first membrane may constitute a pre-filter and the second membrane may constitute a main filter, preferably a sterilizing grade filter.

According to an aspect of the filtration device, the at least one filter support is equipped with a filter comprising a first membrane and a second membrane. The filter is sealed to an upper side of the bottom cover or a lower side of the top cover with the filtrate sides of the first and second membranes facing the filter support and the unfiltrate sides of the first and second membranes facing away from the filter support. In particular, the first membrane may be located upstream of the second membrane.

According to a preferred aspect of the filtration device, the filtration device comprises at least one filter support plate which is equipped with a first filter and a second filter, the first filter and the second filter each comprising a first membrane and a second membrane. The first and second filters are sealed to an upper side and a lower side of the filter support plate, respectively, with the filtrate sides of the first and second membranes facing the respective filter support of the filter support plate and the unfiltrate sides of the first and second membranes facing away from the respective filter support of the filter support plate. In particular, the first membrane may be located upstream of the second membrane.

Usually, the filters can be sealed to the filter supports of the filter support plates with the filtrate sides of the first and second membranes facing the respective filter support and the unfiltrate sides of the first and second membranes facing away from the respective filter support.

Preferably, the first and second filters are identical, which reduces the complexity and facilitates the assembly of the filtration device.

In the context of the invention, sealed preferably means that a tight connection is created that prevents especially fluids, bacteria and/or viruses from passing through the sealed area. Sealed is not to be understood in a narrow sense and also includes connections made by techniques like welding, bonding, clamping, gluing, overmolding etc.

According to a design of the filtration device, the filter support has one or more outer sealing portions at its outer circumference, the outer sealing portions being sealed to outer portions of the second membrane, preferably along the entire outer circumference of the second membrane.

Additionally or alternatively, the filter support may have one or more inner sealing portions at its inner circumference, the inner sealing portions being sealed to inner portions of the second membrane, preferably along the entire inner circumference of the second membrane.

As the outer circumference and/or the inner circumference of the second membrane is/are sealed to the filter support, unfiltrate is prevented from flowing directly from the unfiltrate inlet of the top cover to the filtrate outlet of the bottom cover.

The first membrane may only be sealed to the filter support or to the second membrane at certain portions, such that portions where the first membrane is not sealed, particularly along the outer circumference, define the at least one vent opening. In this case, the second membrane is sealed to the filter support in a first step and the first membrane is sealed to the filter support or the second membrane in a second step.

In particular, the first membrane may have a geometry differing from the geometry of the second membrane such that the first membrane is provided with distinct sealing portions. For example, the first membrane may comprise recesses along its outer circumference defining the at least one vent opening.

The geometry refers to the geometric shape of the membrane, especially in the plane perpendicular to the vertical direction. This means, that certain filter characteristics such as material, nominal pore size, nominal filter retention, nominal volume flow, and thickness etc., may differ as long as the outer circumferences of the membranes have at least at some points the same outer diameter. In other words, when viewed from the top or the bottom, the diameter of the outermost points along the circumference of the membranes should be concurrent.

Additionally or alternatively the shape of the first membrane may differ, preferably in its periphery or center region, from the shape of the second membrane such that the differing shape of the first membrane defines the at least one vent opening.

In particular, the at least one vent opening may be defined by a slit, a hole, a recess or any other opening in the first membrane. The size of the vent opening preferably exceeds the maximum pore size of the first membrane by preferably at least 0.1 µm. By providing vent openings that are slightly or significantly larger than the maximum pore size, the passage through the membrane defined by the vent opening allows gas, in particular air, to escape even with a pressure lower than the bubble point pressure which is typically required for the gas to pass the pore structure. The actual size, as well as the position, of the vent opening(s) has to be chosen such that no significant amount of the fluid to be filtered can pass through the first membrane during normal operation, i.e. the vent opening(s) must not allow a significant amount of the fluid to bypass the first membrane.

In the context of the invention, the maximum pore size is the size of the largest pores in the membrane that can be evaluated for example by the bubble pressure method or by Scanning Electron Microscopy (SEM) analysis of membrane surfaces. In contrast, the nominal pore size is the mean flow pore size that can be measured for example by capillary flow parameter analysis.

According to an aspect of the filtration device, the at least one filter can be pleated. Pleated filters are typically used in longitudinal, generally cylindrically shaped filter cartridges (filter candles). In case of a pleated filter used in a filter cartridge, the first and second membranes of the filter are sandwiched typically between two fleeces (inner and outer drainage layers) that correspond to the filter support plates of a flat filter. The fleece has a double function, i.e., (i) stabilization of the membranes (= support function), and (ii) allowing the membranes to be exposed to the fluid flow deep in the pleats. The pleated membranes with fleeces on both sides are fixed by an inner core and an outer support screen of the filter cartridge. Sealing of the membranes usually takes place at the end caps of the filter cartridge that correspond to the top cover and the bottom cover of a small-scale filtration device having flat filters. After an integrity test having been carried out on the filter cartridge with two pleated membranes, it is also possible that gas remains trapped between the membranes. In case of pleated filters used in a filter cartridge, the at least one vent opening may be placed at or near the highest point with regard to the upright use position of the filter cartridge. As gas is generally lighter than liquids, e.g. air is lighter than water, by having the vent opening at or near the highest point of the first membrane, the density difference between the test gas and the wetting liquid is used in order to prevent the gas from being trapped between the first and second membrane as the gas rises compared to the liquid and is therefore guided to the at least one vent opening. Depending on how the gas flows through the membranes in the filter cartridge, i.e. from the inside to the outside or from the outside to the inside, the at least one vent opening is provided in the inner membrane or the outer membrane, respectively, i.e. the at least one vent opening is positioned in the membrane located upstream of the other membrane.

According to a further aspect, in case of flat filters being used in the filtration device, the filter support on one or both sides of the filter support plate or positioned on the upper side of the bottom cover or on the lower side of the top cover can have an inclined portion providing a guide for the trapped gas leading upwards towards the at least one vent opening in the intended use position of the filtration device. The vent opening is preferably arranged at or near the highest point of the guide. Preferably, the highest point is either at the outer circumference or at the inner circumference of the filter sealed to the filter support. The inclined portion can be part of a concave or convex shape of the filter support. Based on the fact that gas tends to move upwards, the inclined portion guides the gas trapped between the membranes of the filter in an upward direction towards the vent opening(s) or along the vent opening(s).

According to an aspect of the filtration device, the filter support plate comprises a structure, also referred to as the filter support, defining at least one vent channel. The at least one vent channel leads upwards towards the at least one vent opening of the first membrane in the intended use position of the filtration device. For example, the vent channels of the filter support can be formed with gradually increasing height, thereby creating a guide that causes trapped gas to move upwards to the at least one vent opening. The vent channels are generally broad enough so that the second membrane resting thereon can sink into the channels.

As described above, not only the filter support plate, but - in addition or alternatively - the top cover and/or the bottom cover may also comprise said structure (filter support) defining at least one vent channel leading upwards towards the at least one vent opening of the first membrane in the intended use position of the filtration device.

Summarized, the geometry of the filter support and/or the vent channels can be used to guide any gas that may be trapped between the first and second membranes upwards towards the vent opening(s), thus ensuring that the entire filter surface can be used during the filtration process after the integrity test.

According to an aspect of the filtration device, the filter support(s) of the top cover and/or the bottom cover and/or the filter support plate(s) comprise(s) at least one filtrate collecting channel and/or filtrate guiding channel. The at least one filtrate collecting channel and/or filtrate guiding channel correspond(s) to the at least one vent channel of the filter support of the top cover and/or bottom cover and/or filter support plate, respectively. This means that the filtrate collecting channel and/or filtrate guiding channel usually provided in the top cover and/or bottom cover and/or filter support plate can be used for the ventilation such that no additional channels need to be provided in the filtration device. Instead, the filtrate collecting channel and/or filtrate guiding channel can function as the vent channel.

According to a design of the filtration device, the vent opening or the vent openings is/are placed such that the filtration device is symmetric with regard to a vertical axis extending through the center of the filtration device. That way, it is not necessary to perfectly align the filtration device in a specific direction before starting the filtration process, as the exact positioning of the filtration device with regard to a certain direction does not influence the ability to guide gas trapped between the membranes towards the vent exit.

The invention also provides a method for performing an integrity test according to claim 15. With the method an integrity test of the filtration device as defined above, comprising at least one filter having a first membrane and a second membrane, is performed. After the filtration device has been provided, the first membrane and the second membrane are wetted with a liquid, preferably with water or a buffer fluid. The filter is pressurized by applying a test pressure to the first membrane and the second membrane from the upstream side of the filtration device such that the integrity of the filtration device can be tested.

The gas used to pressurize the filter may be compressed air or nitrogen, for example.

In the context of the present invention, the test pressure defines the pressure that is required in order to perform the integrity test. Accordingly, the test pressure allows for a pressure difference between the upstream side of the filter and the downstream side of the filter such that fluid is enabled to pass through the filter. Generally the test pressure is in the range of 25 mbar to 10 bar and is a gauge pressure measured with respect to the ambient atmospheric pressure.

According to an aspect of the method the step of testing the integrity of the filtration device comprises determining a flow rate of a fluid flow from the upstream side of the filter to the downstream side of the filter.

In the context of the invention, the flow rate of a fluid is defined as the amount, in particular the volume, of fluid passing through the filter during a certain amount of time.

The flow rate may be a diffusional flow rate, especially when the integrity test is a diffusion test. Such diffusion tests are usually used when the filtration device comprises a hydrophilic filter.

Alternatively, the integrity test may be a bubble point test or a combination of a diffusion test and a bubble point test.

Further features and advantages of the invention will become apparent from the following description and from the accompanying drawings to which reference is made. In the drawings:
- Figure 1 shows a cross-sectional side view of a filtration device according to the invention;
- Figure 2 shows an exploded view of the components of the filtration device shown in Figure 1;
- Figures 3A to 3H show top views of filter support plates with different filters having a first membrane and a second membrane sealed to the filter support, with the first membranes including vent openings, that can be used in the filtration device shown in Figure 1;

- Figure 4 shows a top view of an alternative filter support to be used in the filtration device for the filtration device shown in Figure 1;
- Figures 5A to 5D schematically show cross sectional side views of different filter supports ;
- Figures 6A to 6C schematically show cross sectional side views of alternatives to the filter supports shown in Figures 5B to 5D; and
- Figure 7 shows a diagram illustrating a loss in filtration flow after performing a PUPSIT.

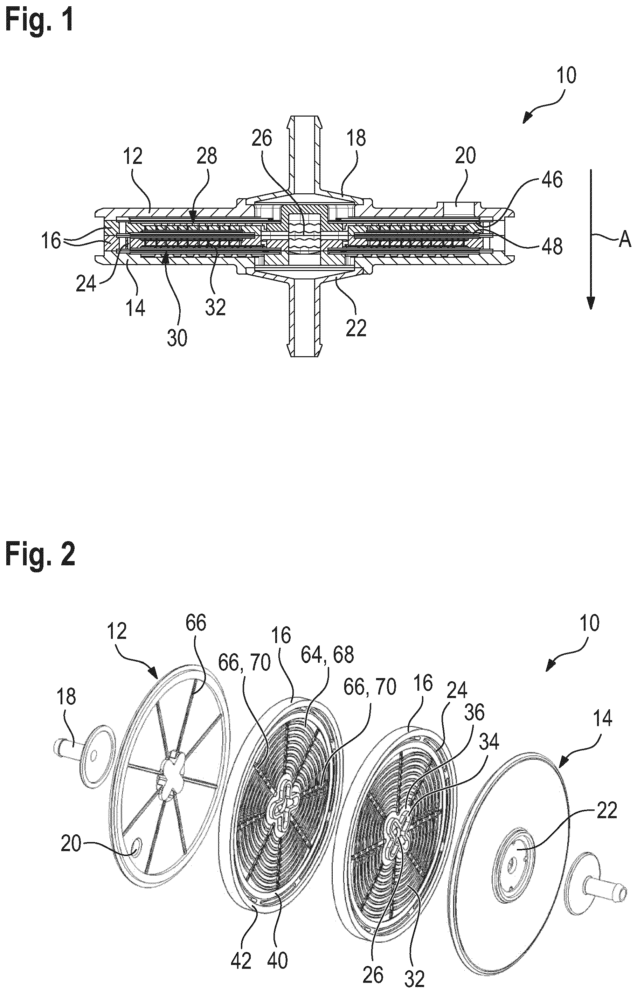

Figures 1 and 2 depict a filtration device 10 comprising a top cover 12, a bottom cover 14 and a number of identically shaped filter support plates 16 (in this embodiment two filter support plates 16) positioned between the top cover 12 and the bottom cover 14. "Identically shaped filter support plates" means that the size and shape of the filter support plates 16 are the same (at least within manufacturing tolerances), whereas material and structural details may vary. Each filter support plate 16 typically has a first filter support 32 on one side for carrying a first filter and a second filter support 32 on the opposite side for carrying a second filter. However, it is possible that a filter support plate 16 is only equipped with one filter.

Additionally, the inside of the bottom cover 14 is formed as a further filter support 32 for receiving a filter (not shown in Figure 2) so that the small-scale filtration device 10 can be operated even without the filter support plates 16. However, depending on the desired filtration performance, the effective filtration area can be adjusted by adding filter support plates 16 as a stack between the top cover 12 and the bottom cover 14. The filtration device 10 as illustrated in Figures 1 and 2 has in total five filter supports 32 (one in the bottom cover 14 and four on the filter support plates 16).

The filtration device 10 is in particular a small-scale filtration device 10 for production of biopharmaceuticals. This implies that the filtration device 10 is used for relatively small batches, ranging from some milliliters to a few liters with an effective filter area of about 5 to 100 cm². However, the concept of the invention may also be applied to larger filtration devices 10 with an effective filter area of up to 300 cm² or even more.

As already mentioned, Figures 1 and 2 show the filtration device 10 having two filter support plates 16. However, the exact number of filter support plates 16 depends on the desired total effective filter area and may be only one, more than two, or even zero.

The arrangement of the bottom cover 14, the filter support plate 16, and the top cover 12 define a vertical direction A, which also designates the general vertical flow direction of the fluid to be filtered through the filtration device 10 in an upright use position as shown in Figure 1.

Accordingly, the terms "top", "bottom", "upper", "lower", etc. refer to the vertical direction which corresponds to the upright use position. Of course, the filtration device may be used in other orientations as well, and terms such as "upper", "lower" etc. are therefore not limiting the use position of the filtration device or the orientation of the filter support in any way.

The top cover 12 includes an unfiltrate inlet 18, for example in the form of an inlet connector as shown here, and an optional vent exit 20.

The bottom cover 14 includes a filtrate outlet 22, for example in the form of an outlet connector as shown here. Similarly to the top cover 12, the bottom cover 14 may include an optional vent exit 20, which is not shown in the Figures.

The unfiltrate inlet 18 and the filtrate outlet 22 may be formed in one piece with the top cover 12 and the bottom cover 14, respectively, or they may be attached later. Likewise, a vent pipe may be formed with or attached to the vent exit 20 of the top cover 12.

As can be seen in Figure 2, the filter support plate 16 is generally flat and disc-shaped. Nevertheless, other shapes are also possible and will be described later.

The filter support plate 16 comprises several distribution holes 24 that are formed in the periphery of the filter support plate 16. Each distribution hole 24 extends vertically through the entire filter support plate 16 and is fluidically connected with the unfiltrate inlet 18 of the top cover 12.

Additionally, a drain hole 26 also extends vertically through the whole filter support plate 16. Preferably, the drain hole 26 is located centrally in the filter support plate 16 and is fluidically connected with the filtrate outlet 22 of the bottom cover 14.

In the assembled state, an upper side 28 of the filter support plate 16 faces the top cover 12 and a lower side 30 of the filter support plate 16 faces the bottom cover 14.

On both the upper side 28 and the lower side 30 of the filter support plate 16 as well as on the inside of the top cover 12 and the bottom cover 14 an inner structure is formed, surrounding the perimeter of the drain hole 26 and including a continuous circumferential inner welding area 34.

Depending on the position of the filter support plate 16 in the filtration device 10, the inner welding area 34 of the upper side 28 is welded in a fluid tight manner to a corresponding likewise oriented inner welding area 34 of the lower side either of the top cover 12 or of a neighboring filter support plate 16, while the downward facing inner welding area 34 of the lower side 30 of the filter support plate 16 is welded in a fluid tight manner to a corresponding likewise oriented inner welding area 34 of the upper side either of the bottom cover 14 or of a neighboring filter support plate 16. Ideally, the inner welding areas 34 that are welded together are congruent.

The term welding area is not to be understood in a limiting sense. As already mentioned, the top cover 12, the bottom cover 14, the filter support plates 16 and/or an annular wall of a housing of the filtration device 10 may be connected to each other, preferably by welding, which is why the term welding area is used. However, the welding areas can be connected to each other by other suitable connecting techniques like bonding, clamping, gluing, overmolding etc.

The inner structure further includes a continuous circumferential inner sealing portion 36, which preferably directly adjoins and surrounds the inner welding area 34.

Relative to the inner welding area 34, the inner sealing portion 36 is vertically offset. In particular, with respect to the orientation in the assembled state of the filtration device 10, the inner sealing portion 36 is at a lower vertical level than the adjoining inner welding area 34 of the upper side 28 or the inside (upper side) of the bottom cover 14, while the inner sealing portion 36 of the lower side 30 or the inside (lower side) of the top cover 12 is at a higher vertical level than the adjoining inner welding area 34.

Further, the upper and lower sides 28, 30 of the filter support plate 16 and/or the inside (upper side) of the bottom cover 14 and/or the inside (lower side) of the top cover 12 form outer structures, including an outer sealing portion 40 and continuous circumferential outer welding areas 42 surrounding the outer sealing portions 40.

Depending on the position of the filter support plate 16 in the filtration device 10, the upward facing outer welding area 42 is welded in a fluid tight manner either to a downward facing corresponding outer welding area 42 of the top cover 12 or a downward facing corresponding outer welding area 42 of a neighboring filter support plate 16, while the downward facing outer welding area 42 is welded in a fluid tight manner either to an upward facing corresponding outer welding area 42 of the bottom cover 14 or to an upward facing corresponding outer welding area 42 of a neighboring filter support plate 16. Ideally, the outer welding areas 42 that are welded together are congruent. Thus, the top and bottom covers 12, 14 together with the connected outer welding areas 42 of the filter support plates 16 form a housing of the filtration device 10.

The inner and outer sealing portions 36, 40 of the filter support plate 16 and/or the bottom cover 14 and/or the top cover 12 are sealed to flat filters 46, 48, especially filter membranes, which are adapted to the shape of the filter supports 32 on the filter support plate 16. This means that the flat filters 46, 48 have a substantially annular shape. In particular, the inner sealing portion 36 of the filter support 32 on the upper side 28 of the filter support plate 16 is sealed to an inner area of a filtrate side of the first filter 46, while the outer sealing portion 40 of the filter support 32 on the upper side 28 of the filter support plate 16 is sealed to an outer area of the filtrate side of the first filter 46. In the same way the filter may be sealed to the filter support 32 on the upper side of the bottom cover 14.

Likewise, the inner sealing portion 36 of the filter support 32 on the lower side 30 of the filter support plate 16 is sealed to an inner area of a filtrate side on an identically shaped second filter 48, while the outer sealing portion 40 of the filter support 32 on the lower side 30 of the filter support plate 16 is sealed to an outer area of the filtrate side of the second filter 48. In the same way, the filter 46, 48 may be sealed to the filter support 32 on the lower side of the top cover 12.

This means that, besides the optional filter(s) sealed to the top cover 12 and/or bottom cover 14, each filter support plate 16 is equipped with two, preferably identically shaped, filters 46, 48, one on each side of the filter support plate 16, with the unfiltrate sides of both filters facing away from the filter support plate 16. "Identically shaped filters" means that the two-dimensional size and shape of the filters 46, 48 are the same, whereas material, (vertical) thickness, nominal pore size, nominal filter retention (efficiency), nominal volume flow and other parameters may vary according to the desired filtration process to be conducted in the filtration device 10.

Preferably, all filters 46, 48 sealed to the filter supports 32 of the filter support plates 16, the bottom cover 14 and the top cover 12 within the filtration device 10, are identically shaped filters 46, 48.

All filters 46, 48 comprise multiple layers of filter material, in particular a first membrane 50 acting as a pre-filter and a second membrane 52 acting as a main filter.

The geometry of the filter support plate 16 with their filter supports 32, especially the vertical offsets between the inner welding areas 34 and the inner sealing portions 36 and between the outer welding areas 42 and the outer sealing portions 40, are adapted to the vertical thickness of the filters 46, 48 supported on both sides 28, 30 of the filter support plate 16 and/or the desired distance between the unfiltrate side of the respective filter and the unfiltrate side of a filter on a neighboring filter support plate 16 or the adjacent bottom cover 14 or top cover 12.

The first and second membranes 50, 52 typically have differing pore sizes as they act as a pre-filter and a main filter, respectively. Accordingly, the nominal pore size of the first membrane 50 is usually larger than the nominal pore size of the second membrane 52. The pore sizes may also be identical if a redundant filtration is desired. The nominal pore size refers to the mean flow pore size measured by capillary flow parameter analysis.

The first and second membranes 50, 52 are sealed together along their inner and outer peripheries within the inner sealing portions 36 and the outer sealing portions 40, respectively.

The first membrane 50 comprises at least one vent opening 54 for releasing any gas trapped between the first membrane 50 and the second membrane 52. In the following, reference is sometimes only made to one vent opening 54, although a plurality of vent openings 54 can be provided in the first membrane 50 at different locations.

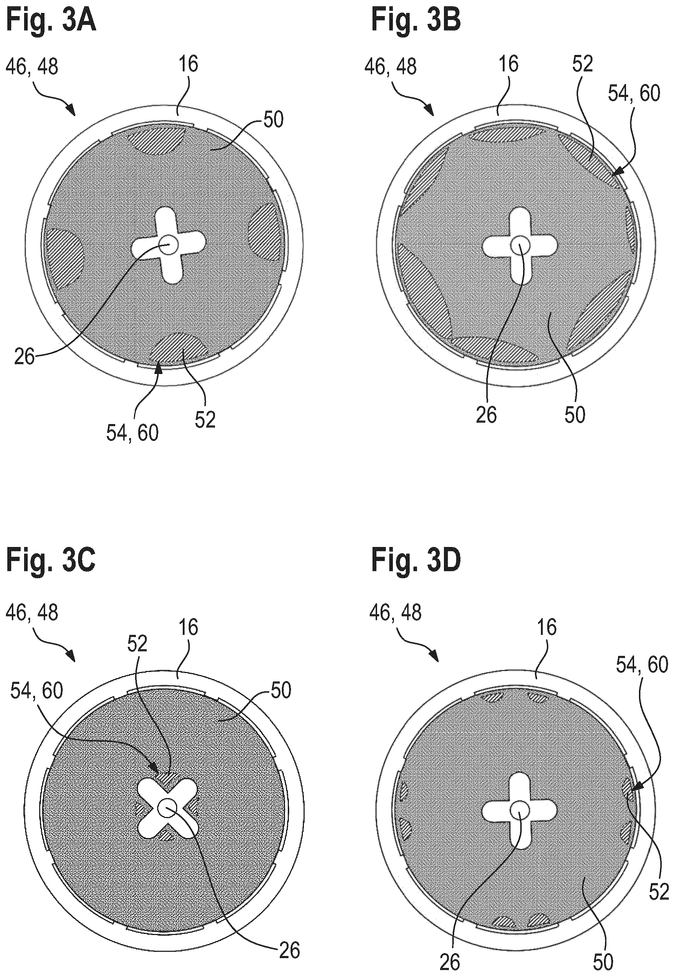

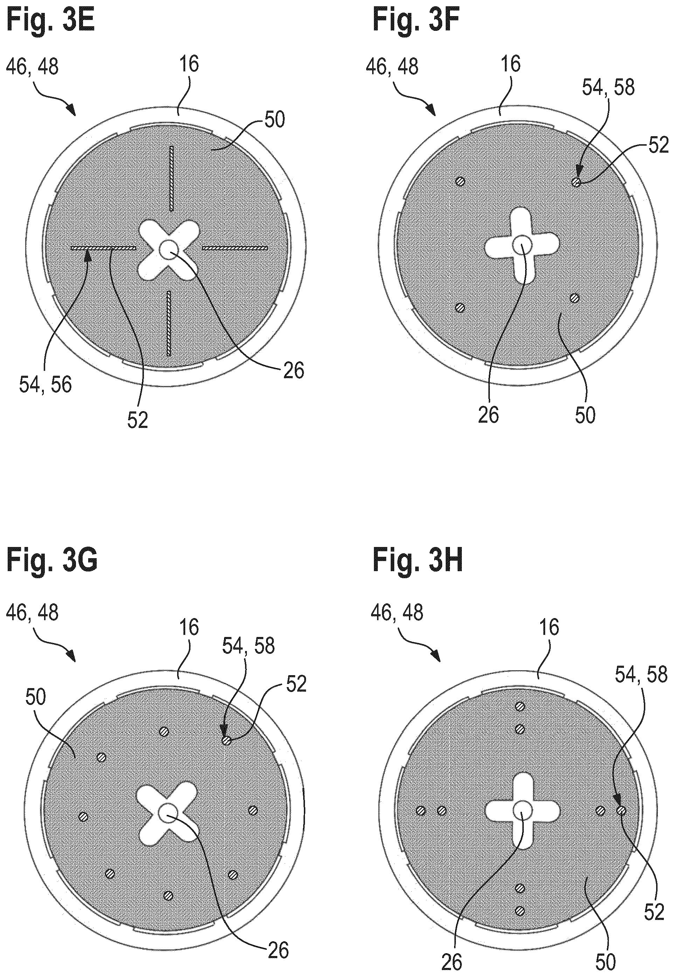

The vent opening 54 can be defined by a slit 56, a hole 58, a recess 60 or any other kind of opening in the first membrane 50. Some examples of vent openings 54 in the first membrane 50 can be seen in Figures 3A to 3H. While Figures 3A through 3D show vent openings 54 defined by recesses 60, Figure 3E shows a vent opening 54 defined by a slit 56 and Figures 3F to 3H show vent openings 54 defined by holes 58.

As can be seen, the number and placement of vent openings 54 can differ and is based on the required effective filter surface, the specific flow parameter(s) and direction(s) within the filtration device 10 as well as the actual application of the filtration device 10.

As can be seen especially well in Figures 3A, 3B and 3D, the first membrane 50 is only sealed to a filter support 32 for example of a filter support plate 16 and/or to the second membrane 52 at certain portions. In particular, due to the recesses 60 in the inner and/or outer areas of the first membrane 50 and the resulting difference in geometry of the first and second membranes 50, 52, the first membrane 50 can only be sealed at certain portions where there is no vent opening 54.

Preferably, the size of the vent openings 54 exceeds the maximum pore size of the first membrane 50 by at least 0.1 µm. However, the vent openings 54 are usually significantly larger than the pores, typically by several orders of magnitude.

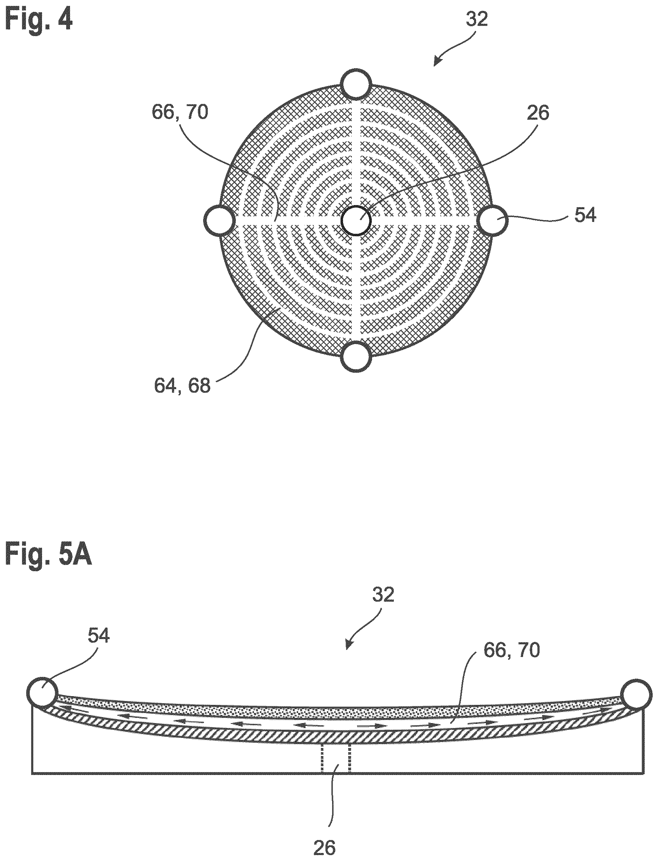

Figures 4, 5A to 5D and 6A to 6C show alternatives to the filter support 32 of the filter support plate 16, the bottom cover 14 and the top cover 12 described above.

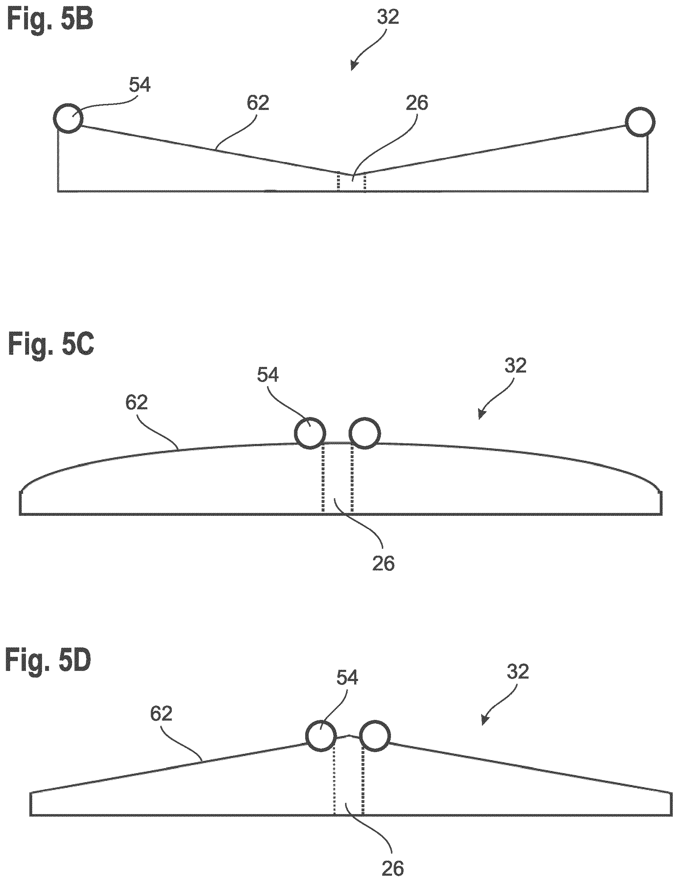

As can be seen in Figure 5D, for example, one side of the filter support 32 is cone-shaped and has inclined portions 62 that provide a guide structure to the vent openings 54, which here are arranged at the inner circumference of the filter. An inversely cone-shaped filter support 32 is shown in Figure 5B, with the vent openings 54 arranged at the outer circumference of the filter. Other examples of a filter support 32 with a curved surface of the filter support 32 are shown in Figures 5A and 5C. Other convex or concave shapes of the filter support 32 providing inclined portions 62 guiding possibly entrapped gas towards the vent openings 54 are also possible.

Since gas is generally lighter than any liquid flowing through the filtration device 10, the gas is guided along the inclined portion 62 in a generally upwards direction towards the vent openings 54 such that gas trapped between the two membranes 50, 52 is effectively vented.

Additionally, the filter support 32 of the filter support plate 16, the top cover 12 and/or the bottom cover 14 may comprise one or more vent channels 64, 66. The vent channels 64, 66 generally lead upwards towards the one or more vent openings 54 of the first membrane 50. That way, any gas inclusions trapped in the space between the first membrane 50 and the second membrane 52 can be guided along the vent channels 64, 66 towards the vent opening(s) 54 from where the gas can reach the vent exit 20 in the top cover 12 and exit the filtration device 10.

As already mentioned, the filter support plate 16 and, optionally, the top cover 12 and/or the bottom cover 14, have structures 32, which serve as filter supports. These structures 32 typically comprise filtrate collecting channels 68 and filtrate guiding channels 70, which are designed to collect the filtrate after having passed through the membranes 50, 52 resting on the filter support 32 and to guide the filtrate to the drain hole 26. The filtrate collecting channels 68 and/or the filtrate guiding channels 70 can also be used as the vent channels 64, 66.

The width dimension of the vent channels 60, 64 is sufficiently large so that the second membrane 52 resting thereon can sink into the vent channels 60, 64.

As can be seen in Figure 4, the vent openings 54 of the filtration device 10 are placed such that they are symmetric with respect to a vertical axis extending through the center of the filtration device 10. The same can be seen in Figures 3A and 3C to 3H. By having a symmetrical arrangement of the vent openings 54, none of the vent openings 54 is favored, such that gas trapped between the membranes 50, 52 can equally escape through any of the vent openings 54. Hence, it is not necessary to have the filtration device 10 oriented in a specific way to ensure that the vent openings 54 effectively prevent gas from being trapped between the first and second membranes 50, 52.

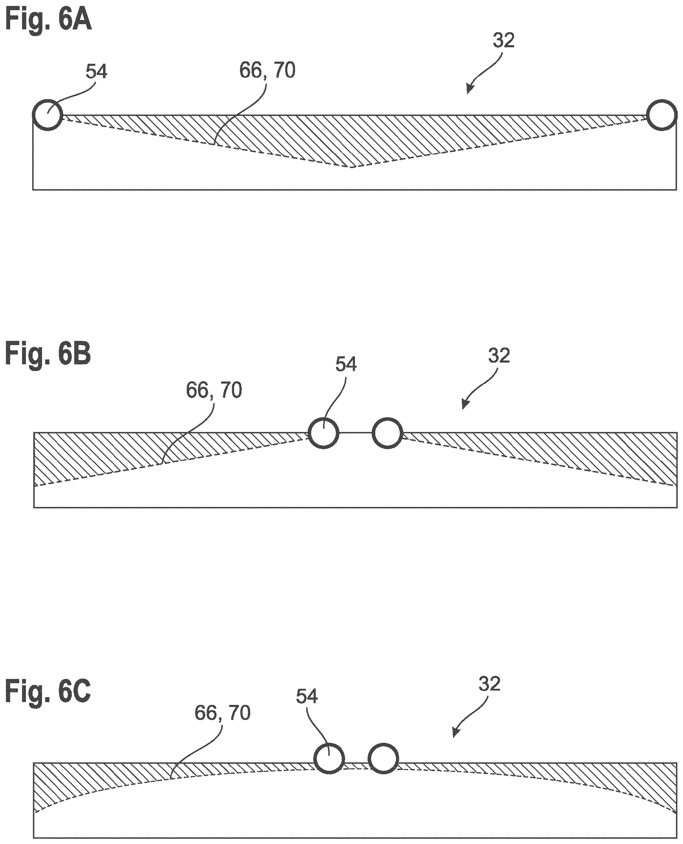

In Figures 6A to 6C variants of an alternative concept of the filter support plates 16 is shown. As can be seen especially well in Figure 6A, the filter support plate 16 retains its substantially horizontal surface. However, the vent channels 64, 66 are formed with a varying (vertical) height/depth in the filter support plate 16 such that the vent openings 54 are located in the inner or outer circumference of the filter opposite the highest vertical point of the vent channel 64, 66. Put differently, the vent channels 64, 68 incline towards the vent openings 54.

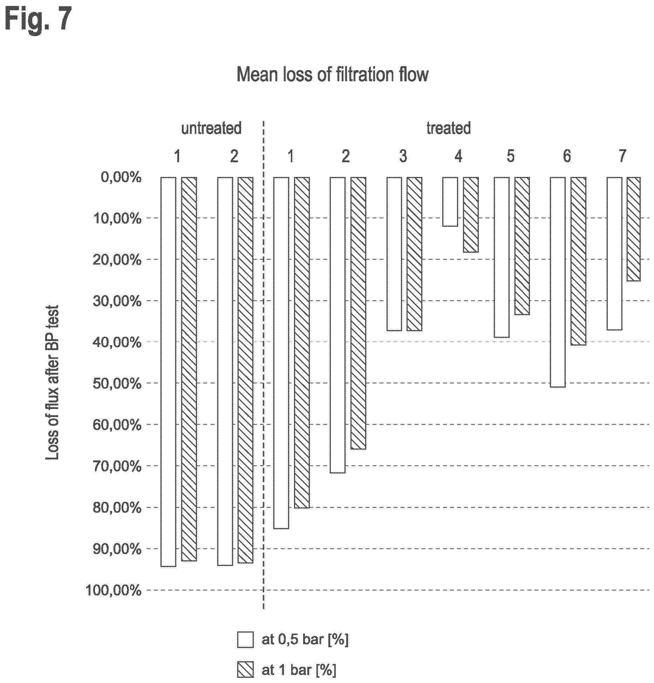

Figure 7 shows a bar chart depicting the loss of filtration flow through a filter after performing a pre-use post-sterilization integrity test (PUPSIT).

The first two measurements correspond to an "untreated" first membrane 50, that is to say a first membrane without any vent opening 54. It can be seen that the filtration flow through the filter experiences a loss of about 95% after performing a bubble point test. Similar results are achieved by performing any other PUPSIT test as well.

Measurements 1 to 7 that are marked "treated" correspond to the measurements having a first membrane 50 with at least one vent opening 54. The difference in the measurement results is due to varying size and position of the vent openings 54. As can be seen, the loss can be reduced drastically to about 10% at 0.5 bar and around 20% at 1 bar.

According to an alternative aspect of the filtration device 10, the filter corresponds to a filter having a pleated membrane. In that case, the vent opening 54 is preferably placed at a point furthest from a plane of the first membrane 50 in the intended use position of the filtration device 10. Accordingly, the vent opening 54 is placed at the vertically "highest" point since gas tends to rise compared to fluid.

In this context, the plane of the first membrane 50 is defined as the plane in which the first membrane 50 is sealed to the filter support plate 16 or the top cover 12 and the bottom cover 14.

Filtration devices 10 comprising pleated membranes are for example filter cartridges or capsules.

### Reference Numbers

- 10: filtration device
- 12: top cover
- 14: bottom cover
- 16: filter support plate
- 18: unfiltrate inlet
- 20: vent exit
- 22: filtrate outlet
- 24: distribution holes
- 26: drain hole
- 28: upper side of filter support plate
- 30: lower side of filter support plate
- 32: filter support (structure)
- 34: inner welding area
- 36: inner sealing portion
- 40: outer sealing portion
- 42: outer welding area
- 46: first filter
- 48: second filter
- 50: first membrane
- 52: second membrane
- 54: vent opening
- 56: slit
- 58: hole
- 60: recess
- 62: inclined portion
- 64: vent channel
- 66: vent channel
- 68: filtrate collecting channel
- 70: filtrate guiding channel

## Claims

1. A filtration device (10), in particular a small-scale filtration device for production of biopharmaceuticals, the filtration device (10) comprising:
a housing including a top cover (12) having an unfiltrate inlet (18) and a bottom cover (14) having a filtrate outlet (22), and
at least one filter support (32) positioned between the top cover (12) and the bottom cover (14) along a vertical direction (A),
the filter support (32) being equipped with at least one filter (46, 48) having a first membrane (50) and a second membrane (52), each membrane (50, 52) having a filtrate side and an opposite unfiltrate side,
wherein the first membrane (50) comprises at least one vent opening (54) for releasing gas trapped between the first membrane (50) and the second membrane (52).

2. The filtration device (10) according to claim 1, wherein the first membrane (50) constitutes a pre-filter and the second membrane (52) constitutes a main filter, preferably a sterilizing grade filter.

3. The filtration device (10) according to claim 1 or 2, wherein the filtration device (10) comprises at least one filter support plate (16) which is equipped with a first filter (46) and a second filter (48), the first filter (46) and the second filter (48) each comprising a first membrane (50) and a second membrane (52), wherein the first and second filters (46, 48) are sealed to an upper side (28) and a lower side (30) of the filter support plate (16), respectively, with the filtrate sides of the first and second membranes (50, 52) facing the respective filter support (32) of the filter support plate (16) and the unfiltrate sides of the first and second membranes (50, 52) facing away from the respective filter support (32) of the filter support plate (16).

4. The filtration device (10) according to any of the preceding claims, wherein the filter support (32) has one or more outer sealing portions (40) at its outer circumference, the outer sealing portions (40) being sealed to outer portions of the second membrane (52), preferably along the whole outer circumference of the second membrane (52).

5. The filtration device (10) according to any of the preceding claims, wherein the filter support (32) has one or more inner sealing portions (36) at its inner circumference, the inner sealing portions (36) being sealed to inner portions of the second membrane (52), preferably along the whole inner circumference of the second membrane (52).

6. The filtration device (10) according to any of the preceding claims, wherein the first membrane (50) is only sealed to the filter support (32) or to the second membrane (52) at certain portions, such that portions where the first membrane is not sealed, particularly along the outer circumference, define the at least one vent opening (54).

7. The filtration device (10) according to any of the preceding claims, wherein the shape of the first membrane (50) differs, preferably in its periphery or center region, from the shape of the second membrane (52), such that the differing shape of the first membrane (50) defines the at least one vent opening (54).

8. The filtration device (10) according to any of the preceding claims, wherein the at least one vent opening (54) is defined by a slit (56), a hole (58), a recess (60) or any other opening in the first membrane (50), the size of the vent opening (54) exceeding the pore size of the first membrane (50), preferably by at least 0.1 µm.

9. The filtration device (10) according to any of the preceding claims, wherein the at least one filter is pleated, and that the at least one vent opening (54) is placed at or near the highest point of the first membrane (50) in the intended use position of the filtration device (10).

10. The filtration device (10) according to any of the preceding claims, wherein one side of the filter support (32) on one or both sides of the filter support plate (16), the bottom cover (14) and/or the top cover (12) has an inclined portion (62) providing a guide upwards towards the at least one vent opening (54) in the intended use position of the filtration device (10), the at least one vent opening (54) being preferably arranged at the outer circumference or the inner circumference of the filter (46, 48) sealed to the filter support (32).

11. The filtration device (10) according to any of the preceding claims, wherein the filter support plate (16) comprises the filter support (32) defining at least one vent channel (64, 66) leading upwards towards the at least one vent opening (54) of the first membrane (50) in the intended use position of the filtration device (10).

12. The filtration device (10) according to any of the preceding claims, wherein the top cover (12) and/or the bottom cover (14) comprise(s) the filter support (32) defining at least one vent channel (66) leading upwards towards the at least one vent opening (54) of the first membrane (50) in the intended use position of the filtration device (10).

13. The filtration device (10) according to claim 11 or 12, wherein the filter support(s) (32) of the top cover (12) and/or the bottom cover (14) and/or the filter support plate (16) comprise(s) at least one filtrate collecting channel (68) and/or filtrate guiding channel (70), wherein the at least one filtrate collecting channel (68) and/or filtrate guiding channel (70) corresponds to the at least one vent channel (64, 66) of the filter support (32) of the top cover (12) and/or bottom cover (14) and/or filter support plate (16), respectively.

14. The filtration device (10) according to any of the preceding claims, wherein the vent opening (54) or the vent openings (54) is/are placed such that the filtration device (10) is symmetric with regard to a vertical axis extending through the center of the filtration device (10).

15. A method for performing an integrity test of a filtration device (10) according to any of the preceding claims, wherein the filtration device (10) comprises at least one filter (46, 48) having a first membrane (50) and a second membrane (52), and wherein the method comprises the following steps:
a) wetting the first membrane (50) and the second membrane (52) with a liquid, preferably with water or a buffer solution,
b) pressurizing the first membrane (50) and the second membrane (52) with a test pressure by introducing gas from an upstream side of the filtration device (10), and
c) testing the integrity of the filtration device (10).
